# EUROPEAN PATENT SPECIFICATION

(11) **EP 1 397 271 B1**
(45) Date of publication and mention of the grant of the patent: **09.07.2008**
(21) Application number: 02736363.9
(22) Date of filing: 29.05.2002
(51) Int. Cl.: B60P 7/02

(54) **COVER, POSSIBLE TO OPEN, CARRIED BY A LORRY CASING**
VON EINEM LASTWAGENKASTEN GESTÜTZTE, ZU ÖFFNENDE ABDECKUNG
TOIT DE CAISSE DE CAMION POUVANT S'OUVRIR

(30) Priority: 30.05.2001 SE 0101875
(43) Date of publication of application: 17.03.2004
(73) Proprietor: Johansson, Roland, 573 73 Sunnhultsbrunn (SE)
(72) Inventor: Johansson, Roland, 573 73 Sunnhultsbrunn (SE)
(74) Representative: Lundquist, Arne
(86) International application number: PCT/SE2002/001023
(87) International publication number: WO 2002/097226

(56) References cited:
- FI-B- 75 765
- FI-B- 81 750
- SE-B- 462 476
- US-A- 3 186 756

## Description

The present invention relates to a lorry casing, comprising an upper, substantially horizontal, rectangular first frame, formed by two parallel first and second frame portions and perpendicular thereto two parallel third and fourth frame portions, preferably furthermore a substantially vertical, rectangular second frame, formed by two parallel fifth and sixth frame portions and perpendicular thereto a seventh frame portion and parallel thereto the first frame portion.

Lorry casings are used extensively for the transport of material in pieces like chips etc. In order to enable this material to be filled easily into the lorry casing, its roof must possible to open, that is to say, it has the form of a cover, such that the filling may be carried out from above.

There is also a demand for simple designs to enable the complete opening of the side wall of a lorry casing.

Several designs are known, the object of which is to make it possible to open the roof or the side wall. Common to them is, that they are relatively complicated and cumbersome FI 75765 discloses a lorry casing according to the preamble of claim 1. The object of the present invention is to create a cover, possible to open, of the art mentioned introductorily, which is simple and reliable. According to the invention such a cover is primarily characterised by the features of claim 1.

The cover, possible to open, may be designed in different ways within the scope of the invention, Thus the cover may be provided with first and second rack rails, co-operating with first and second gear wheel, driven by a driving means in common. The cover may form a roof at said lorry casing or form a side wall of the same.

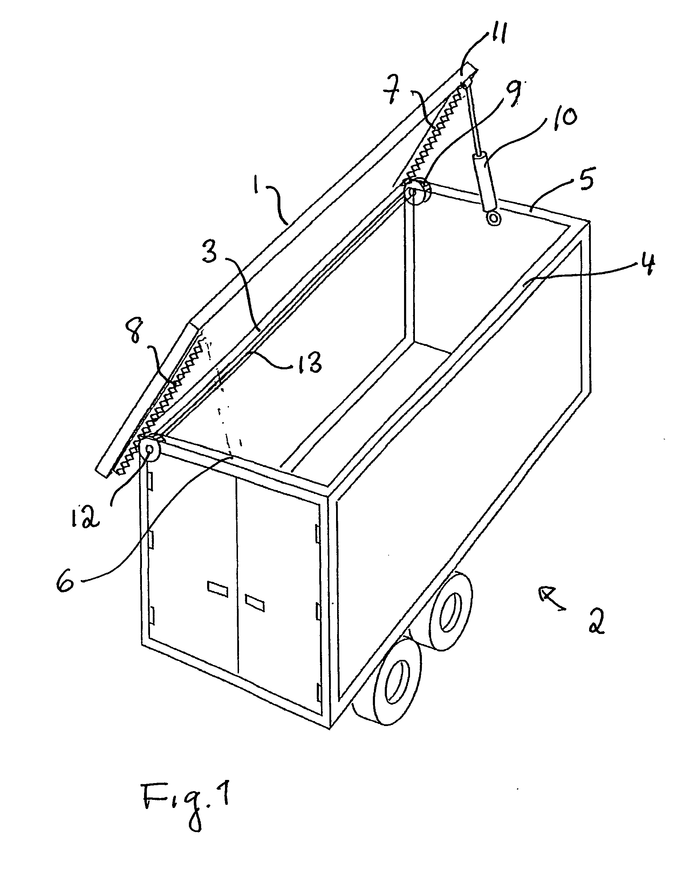

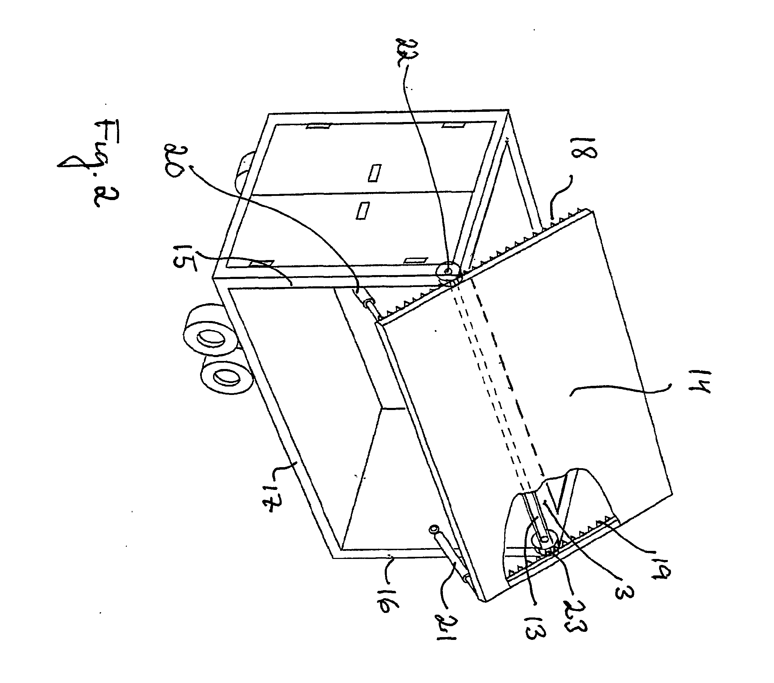

The invention shall be described more in detail in the following, reference being made to the enclosed schematic figures, which show, in perspective, a lorry casing, in figure 1 with a cover, possible to open, in the form of a roof, and in figure 2 with a cover, possible to open, in the form of a side wall.

Thus, in figure 1 there is shown a first embodiment of the invention. A lorry casing, in the figure denoted commonly by 2 is provided with a cover, possible to open in the form of a roof 1, in closed position, resting at a horizontal, rectangular frame, formed by two elongated parallel first and second frame portions 3 and 4, and two shorter perpendicular, parallel third and fourth frame portions 5 and 6. The roof is at its shorter ends provided with two rack rails 7 and 8, parallel to and adjacent to the frame portions 5 and 6. The rack rails co-operate with two gear wheels 9 and 12, driven by a driving device, not shown more in detail, which may be an electrical motor or a hydraulic motor, driving a shaft 13. A longitudinally transformable link 10 is at one of its ends journalled fastened approximately at the middle of the inner side of the frame portion 5, somewhat below its upper limit. The other end of the link is journalled, fastened at the corner 11 of the roof, that connects to the second and third frame portions when the roof is in its locked position. The link is such designed, that it performs an action against the movement, that is to say a shock- absorbing force, at the elongation transformation.

When opening the roof the driving device is brought to rotate the gear wheels 9 and 12, which thereby co-operating with the rack rails 7 and 8 displace the roof perpendicularly to the first frame portion 3. Thereby the link 10 is first retracted, and will then make a counter- clock turning movement and will then be elongated. During these movements the link will exert a counter- acting force. By degrees the force of gravitation will fell down the roof from its original, horizontal position to a substantially vertical position outside of the lorry casing. When closing the roof the gear wheels are brought to rotate in the reversed direction in relationship to that active when the roof was opened. The roof is provided with not shown locking means for locking the roof against the rectangular frame.

In figure 2 there is shown an alternative embodiment of the invention, where the lorry casing 2 is provided with a side wall in the form of a cover 14, possible to open. At a frame portion 3 there is a shaft 13 arranged, driven by a not shown driving means, which shaft is provided at each end with a gear wheel 22,23, co-operating with rack rails 18 and 19 at the cover 14. Elongation transformable links 20 and 21 are journalled within vertical frame portions 15 and 16, forming together with the frame portion 3 and a lower frame portion 17 a rectangle, defining an opening, which the cover 14 is arranged to close in closed position. When opening the cover, the gear wheels are rotated and will then lift the cover upwards till it lies in a horizontal position above the upper portion of the lorry casing. The links 20 and 21 are thereby retracted and are then elongated, damping the movement of the cover 14. Closing the cover 14 occurs in a corresponding way with the gear wheels driven in the opposite direction. The cover is provided with locking means, not shown, for locking of same in the closed position.

## Claims

1. A lorry casing (2), comprising an upper, substantially horizontal, rectangular first frame, formed by two parallel first (3) and second (4) frame portions and perpendicular thereto two parallel third (5) and fourth (6) frame portions, preferably furthermore a substantially vertical, rectangular second frame, formed by two parallel fifth (15) and sixth (16) frame portions and perpendicular thereto a seventh (17) frame portion and parallel thereto the first frame portion (3), and a cover (1,14), which may be opened
**characterised in**
**that** the cover (1,14) is provided with at least one rack rail (7,8,18,19) perpendicularly arranged to the first or second frame portion (3,4), which rack rail is arranged to co-operate with a first gear wheel (9,22,12,23) journalled at the first frame, driven by a driving means, such that the cover (1,14) is displaced with regard to the first or second frame portion (3,4) when the gear wheel is rotated, to be brought from a closed substantially horizontal or vertical position to a substantially vertical or horizontal position outside of the lorry casing (2), respectively, wherein at least one longitudinally transformable link (10,20,21) is journalled, connected at one end to a frame portion, and at the other end to the cover, which link (10,20,21) is first retracted when the cover (1,14) is displaced from the closed to the opened position and is then elongated and thereby performs a shock- absorbing force, acting against the movement of the cover.

2. A lorry casing (2) according to claim 1,
**characterised in**
**that** the cover is provided with first (7,20) and second (8,21) rack rails, co-operating with corresponding first (9,12) and second (12,23) gear wheels at the first frame.

3. A lorry casing (2) according to claim 1 or 2,
**characterised in**
**that** the cover forms a roof (1).

4. A lorry casing (2) according to claim 1 or 2,
**characterised in**
**that** the cover forms a side wall (14).

## Patentansprüche

1. Lastwagenkasten (2) mit einem oberen, im wesentlichen horizontalen rechteckigen ersten Rahmen, der durch zwei parallele erste (3) und zweite (4) Rahmenabschnitte und senkrecht dazu zwei parallele dritte (5) und vierte (6) Rahmenabschnitte gebildet ist, sowie vorzugsweise ferner mit einem im wesentlichen vertikalen rechteckigen zweiten Rahmen, der durch zwei parallele fünfte (15) und sechste (16) Rahmenabschnitte und senkrecht dazu einen siebten (17) Rahmenabschnitt und parallel dazu den ersten Rahmenabschnitt (3) gebildet ist, sowie mit einer Abdeckung (1, 14), die geöffnet werden kann,
**dadurch gekennzeichnet, dass** die Abdeckung (1,14) mit mindestens einer Zahnstange (7, 8, 18, 19) versehen ist, die senkrecht zu dem ersten oder zweiten Rahmenabschnitt (3, 4) und so angeordnet ist, dass sie mit einem ersten Zahnrad (9, 22, 12, 23) zusammenwirkt, das drehbar an dem ersten Rahmen gelagert und mit einer Antriebseinrichtung antreibbar ist, so dass die Abdeckung (1, 14) in Bezug auf den ersten oder zweiten Rahmenabschnitt (3, 4) verschoben wird, wenn das Zahnrad gedreht wird, um von einer geschlossenen, im wesentlichen horizontalen oder vertikalen Position in eine im wesentlichen vertikale beziehungsweise horizontale Position außerhalb des Lastwagenkastens (2) gebracht zu werden, wobei mindestens eine in Längsrichtung verfahrbare Verbindung (10, 20, 21) gedreht wird, die an einem Ende mit einem Rahmenabschnitt und an dem anderen Ende mit der Abdeckung verbunden ist, wobei die Verbindung (10, 20, 21) zunächst eingefahren wird, wenn die Abdeckung (1, 14) von der geschlossenen in die geöffnete Position verschoben wird, und dann ausgefahren wird und dabei eine Stoß-absorbierende Kraft ausübt, die gegen die Bewegung der Abdeckung wirkt.

2. Lastwagenkasten (2) nach Anspruch 1,
**dadurch gekennzeichnet, dass** die Abdeckung mit ersten (7, 20) und zweiten (8, 21) Zahnstangen versehen ist, die mit korrespondierenden ersten (9, 12) und zweiten (12, 23) Zahnrädern an dem ersten Rahmen zusammenwirken.

3. Lastwagenkasten (2) nach Anspruch 1 oder 2,
**dadurch gekennzeichnet, dass** die Abdeckung ein Dach (1) bildet.

4. Lastwagenkasten (2) nach Anspruch 1 oder 2,
**dadurch gekennzeichnet, dass** die Abdeckung eine Seitenwand (14) bildet.

## Revendications

1. Caisse de camion (2) comportant un premier cadre supérieur rectangulaire sensiblement horizontal formé par une première (3) et une deuxième (4) partie de cadre, et perpendiculaires à celles-ci, deux troisième (5) et quatrième (6) parties de cadre parallèles, de préférence de plus un second cadre rectangulaire sensiblement vertical, formé par deux cinquième (15) et sixième (16) parties de cadre parallèles et perpendiculairement à celles-ci, une septième (17) partie de cadre et parallèlement à celle-ci la première partie de cadre (3), et un couvercle (1, 14) qui peut être ouvert,
**caractérisée en ce que**
le couvercle (1, 14) est muni d'au moins rail denté (7, 8, 18, 19) agencé perpendiculairement à la première ou la deuxième partie de cadre (3, 4), lequel rail denté est agencé pour coopérer avec une première roue dentée (9, 22, 12, 23) tourillonnée au niveau du premier cadre, entraînée par des moyens d'entraînement, de sorte que le couvercle (1, 14) est déplacé par rapport à la première ou la deuxième partie de cadre (3, 4) lorsque la roue dentée est mise en rotation, pour être amenée depuis une position fermée sensiblement horizontale ou verticale jusqu'à une position sensiblement verticale ou horizontale à l'extérieur de la caisse de camion (2), respectivement, au moins une bielle transformable longitudinalement (10, 20, 21) étant tourillonnée, en étant reliée à une extrémité à une partie de cadre et à l'autre extrémité au couvercle, laquelle bielle (10, 20, 21) est tout d'abord rétractée lorsque le couvercle (1, 14) est déplacé depuis la position fermée vers la position ouverte et est ensuite allongée et effectue ainsi une force d'absorption de choc, agissant à l'encontre du déplacement du couvercle.

2. Caisse de camion (2) selon la revendication 1,
**caractérisée en ce que**
le couvercle est muni d'un premier (7, 20) et d'un second (8, 21) rail denté, coopérant avec des premières (9, 12) et secondes (12, 23) roues dentées correspondantes au niveau du premier cadre.

3. Caisse de camion (2) selon la revendication 1 ou 2,
**caractérisée en ce que** le couvercle forme un toit (1).

4. Caisse de camion (2) selon la revendication 1 ou 2,
**caractérisée en ce que** le couvercle forme une paroi latérale (14).
